# EUROPÄISCHE PATENTANMELDUNG

(11) **EP 1 126 581 A2**
(43) Veröffentlichungstag der Anmeldung: **22.08.2001**
(21) Anmeldenummer: 01102543.4
(22) Anmeldetag: 06.02.2001
(51) Int. Cl.: H02K 7/02

(54) **Elektrische Antriebsvorrichtung**

(30) Priorität: 18.02.2000 DE 10007505
(71) Anmelder: Schuler Pressen GmbH & Co. KG, 73033 Göppingen (DE)
(72) Erfinder: Fahrenbach, Jürgen, 73101 Aichelberg (DE)

(57) **Zusammenfassung**

Eine elektrische Antriebsvorrichtung, insbesondere für Pressenanlagen und/oder deren Bestandteile, weist einen Haupt-Elektromotor zum Antreiben eines Schwungrades, welches über eine lösbare Kupplungseinrichtung eine Abtriebswelle antreibt, und einen Zusatz-Elektromotor auf, der zusätzlich zum Antrieb der Antriebswelle nutzbar ist. Der Haupt-Elektromotor und der Zusatz-Elektromotor sind innerhalb des Schwungrades angeordnet.

## Beschreibung

Die Erfindung betrifft eine elektrische Antriebsvorrichtung, insbesondere für Pressenanlagen und/oder deren Bestandteile, nach der im Oberbegriff von Anspruch 1 näher definierten Art.

Eine gattungsgemäße Antriebsvorrichtung ist aus der DE 44 21 527 C2 bekannt.

Zwar ist mit dieser Antriebsvorrichtung aufgrund der beiden verwendeten Elektromotoren ein verhältnismäßig variabler Antrieb einer Pressenanlage möglich, die dort beschriebene Antriebsvorrichtung ist jedoch unter anderem aufgrund des von ihr beanspruchten Bauraumes und ihres umständlichen Aufbaus nachteiligerweise auf ein sehr enges Einsatzgebiet beschränkt.

Es ist daher Aufgabe der vorliegenden Erfindung, eine elektrische Antriebsvorrichtung zu schaffen, welche sehr variabel betrieben werden kann, mit sehr geringem Aufwand für die verschiedensten Anwendungszwecke verwendbar ist und welche nur einen geringen Bauraum beansprucht.

Erfindungsgemäß wird diese Aufgabe durch die im kennzeichnenden Teil von Anspruch 1 genannten Merkmale gelöst.

Durch das erfindungsgemäße Unterbringen des Haupt-Elektromotors und des Zusatz-Elektromotors innerhalb des Schwungrades entsteht ein modulartiger Aufbau der elektrischen Antriebsvorrichtung, der es ermöglicht, daß die erfindungsgemäße Antriebsvorrichtung für die verschiedensten Zwecke, z.B. bei den verschiedensten Arten von Pressenanlagen bzw. einzelnen Pressen und deren Bestandteilen, wie z.B. bei Auswerfersystemen oder bei Transfersystemen, verwendet werden kann und hierbei nur einen geringen Bauraum in Anspruch nimmt.

Der erfindungsgemäße Aufbau führt zu einer äußerst kompakten Antriebsvorrichtung, die bei vielen verschiedenen Anwendungen einen sehr geringen Anpassungs- und Montageaufwand erfordert. Durch die beiden voneinander unabhängigen Elektromotoren kann beispielsweise bei Pressen der Leerhub vollständig vom Arbeitshub abgekoppelt werden, wodurch insbesondere der Leerhub frei programmierbar ist.

In vorteilhaften Weiterbildungen der Erfindung kann eine Flüssigkeitskühlung für den Haupt-Elektromotor und/oder den Zusatz-Elektromotor vorgesehen sein. Diese Flüssigkeitskühlung, die eine erheblich größere Leistung des jeweiligen flüssigkeitsgekühlten Elektromotors ermöglicht, bietet sich bei dem kompakten Aufbau der erfindungsgemäßen Antriebsvorrichtung an, wohingegen dies bei bisher bekannten, herkömmlichen Antriebsvorrichtungen teilweise zu erheblichen Schwierigkeiten führte.

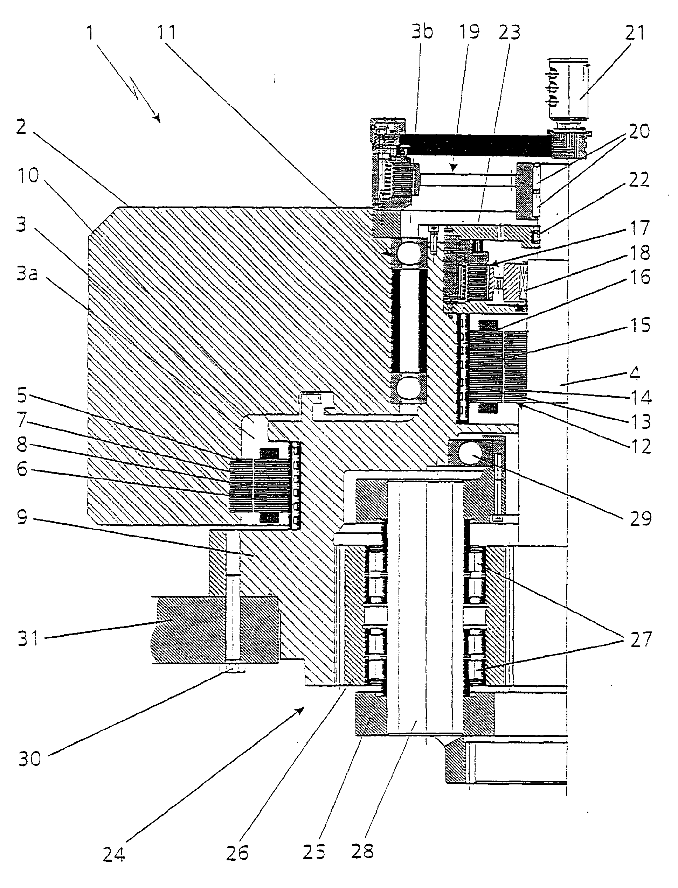

Vorteilhafte Ausgestaltungen und Weiterbildungen der Erfindung ergeben sich aus den restlichen Unteransprüchen sowie aus dem nachfolgend anhand der Zeichnung prinzipmäßig dargestellten Ausführungsbeispiel.

Die einzige Figur zeigt einen Schnitt durch eine erfindungsgemäße elektrische Antriebsvorrichtung.

Eine elektrische Antriebsvorrichtung 1, im vorliegenden Fall für eine nicht dargestellte Pressenanlage, eine einzelne Presse, wie z.B. eine Kniehebelpresse oder eine Exzenterpresse, oder eine mit der Presse verbundene Einrichtung, wie z.B. eine Auswerfereinrichtung oder eine Transporteinrichtung von jeweils bekannter Bauart, weist ein Schwungrad 2 auf. Das Schwungrad 2 besitzt eine zentrale Bohrung 3, in welcher unter anderem eine Antriebswelle 4 angeordnet ist. Die Antriebswelle 4 berührt jedoch nicht die Wandung der zentralen Bohrung 3 des Schwungrades 2, da sich in derselben noch weitere, im folgenden näher beschriebene Bauteile befinden.

Die zentrale Bohrung 3 des Schwungrades 2 ist stufenförmig mit im wesentlichen zwei Stufen 3a und 3b ausgebildet. Die erste Stufe 3a weist einen größeren Durchmesser als die zweite Stufe 3b auf und ist an der Unterseite des Schwungrades 2 an der der anzutreibenden Einrichtung zugewandten Seite angeordnet. Innerhalb dieser ersten Stufe 3a ist eine als Haupt-Elektromotor 5 bezeichnete erste elektrische Antriebseinrichtung untergebracht, im wesentlichen bestehend aus einem innenliegenden Stator 6 und einem außenliegenden Rotor 7. Zwischen dem Stator 6 und dem Rotor 7 befindet sich ein Luftspalt 8, der in bekannter Weise für die Leistung des Haupt-Elektromotors 5 verantwortlich ist. Der Rotor 7 ist fest mit dem Schwungrad 2 verbunden und treibt bei entsprechender Bestromung dasselbe an, wohingegen der Stator 6 an einem Trägerflansch 9 angebracht ist, dessen Funktion später noch näher beschrieben werden wird. Zwischen dem Stator 6 und dem Trägerflansch 9 befindet sich zusätzlich noch eine Kühleinrichtung 10, die den Stator 6 kühlt und somit eine höhere Leistung des Haupt-Elektromotors 5 ermöglicht.

Das Schwungrad 2 ist auf dem Trägerflansch 9 über eine zwei Kugellager aufweisende Lagereinrichtung 11 drehbar gelagert, und zwar innerhalb der zweiten Stufe 3b der zentralen Bohrung 3. Auf der der Lagereinrichtung 11 gegenüberliegenden Seite ist der Trägerflansch 9 hohl ausgebildet und es ist dort eine zweite, als Zusatz-Elektromotor 12 bezeichnete elektrische Antriebseinrichtung angeordnet. Der Zusatz-Elektromotor 12 weist ebenfalls einen Stator 13, einen Rotor 14 sowie einen dazwischenliegenden Luftspalt 15 auf, hierbei ist jedoch der Stator 13 außenliegend und der Rotor 14 innenliegend. Konkret ist der Rotor 14 auf der Antriebswelle 4 angeordnet und ist somit in der Lage, dieselbe anzutreiben, und der Stator 13 ist über eine weitere Kühleinrichtung 16 mit dem Trägerflansch 9 verbunden. Die Kühleinrichtung 16 dient, ähnlich wie die Kühleinrichtung 10, zur Kühlung des Stators 13 und ermöglicht so eine höhere Leistung des Zusatz-Elektromotors 12.

Oberhalb des Zusatz-Elektromotors 12 ist ebenfalls in der zweiten Stufe 3b der zentralen Bohrung 3 eine Bremseinrichtung 17 angeordnet, welche von an sich bekannter Bauart sein kann und über eine beliebige Welle-Nabe-Verbindung 18 mit der Antriebswelle 4 verbunden ist und diese gegebenenfalls abbremsen kann. Die Bremseinrichtung 17 ist von an sich bekannter Bauart und wird daher im folgenden nicht näher beschrieben. Des weiteren ist mit der Antriebswelle 4 eine im vorliegenden Fall hydraulisch arbeitende Kupplungseinrichtung 19 verbunden, die über eine ebenfalls beliebige Welle-Nabe-Verbindung 20 den Eingriff zwischen dem von dem Haupt-Elektromotor angetriebenen Schwungrad 2 und der Antriebswelle 4 herstellt bzw. trennt. Die Kupplungseinrichtung 19 weist des weiteren einen Ölversorgungsbehälter 21 auf, der im Falle einer ebenfalls denkbaren elektromagnetischen Kupplungseinrichtung 19 auch als elektrische Energiezuführung ausgebildet sein kann. Beim Betrieb der Presse bzw. der anzutreibenden Einrichtung ist prinzipiell vorgesehen, das Schwungrad 2 ständig anzutreiben und nur bei Bedarf die Kupplungseinrichtung 19 einzurücken.

Zwischen der Bremseinrichtung 17 und der Kupplungseinrichtung 19 ist die Antriebswelle 4 über eine Lagereinrichtung 22 gegenüber einem mit dem Trägerflansch 9 verbundenen Flanschelement 23 gelagert. Die Antriebswelle 4 kann also sowohl von dem Haupt-Elektromotor 5 über das Schwungrad 2 und die Kupplungseinrichtung 19 als auch direkt von dem Zusatz-Elektromotor 12 angetrieben werden. Die Antriebswelle 4 bildet jedoch nicht den direkten Antrieb für die anzutreibende Maschine bzw. Presse, sondern es ist eine Getriebeeinrichtung 24 zur Unter- bzw. Übersetzung der Drehzahl der Antriebswelle 4 auf eine Abtriebswelle 25 der Getriebeeinrichtung 24 vorgesehen. Die Abtriebswelle 25 bildet somit den eigentlichen Antrieb für die Presse bzw. die anzutreibende Einrichtung. Bei schnellaufenden Maschinen bzw. Pressen kann unter Umständen auch auf die Getriebeeinrichtung 24 verzichtet werden.

Die Getriebeeinrichtung 24 ist als Planetengetriebe ausgebildet, welches als Hohlrad den Trägerflansch 9 aufweist. Das Sonnenrad wird durch die Antriebswelle 4 gebildet, welches mehrere Planetenräder 26 antreibt, von denen im vorliegenden Fall jedoch nur eines dargestellt ist. Jedes Planetenrad 26 ist über jeweilige Verzahnungen sowohl mit der Antriebswelle 4 als auch mit dem Trägerflansch 9 in Eingriff. Des weiteren sind die Planetenräder 26 über Lagereinrichtungen 27 auf jeweiligen Bolzen 28 gelagert, die mit der Abtriebswelle 25 fest verbunden sind. Der Planetenradträger bzw. die Abtriebswelle 25 ist gegenüber dem Trägerflansch 9 über eine weitere Lagereinrichtung 29 gelagert.

Bei dem vorliegenden Planetengetriebe 24 steht also das Hohlrad bzw. der Trägerflansch 9 still, wozu derselbe über als Schrauben ausgebildete Befestigungselemente 30 mit einem Teil 31 der anzutreibenden Presse verbunden ist. Das Sonnenrad bzw. die Antriebswelle 4 treibt die Planetenräder 26 an, welche sich durch ihre Verzahnungen an dem Innendurchmesser des Trägerflansches 9 abwälzen und um die Antriebswelle 4 rotieren. Auf diese Art und Weise bildet der ebenfalls um die Antriebswelle mit einer geringeren Drehzahl als dieselbe rotierende Planetenradträger bzw. die Abtriebswelle 25 den Abtrieb. Somit kann die hohe Drehzahl der Antriebswelle 4 auf eine verhältnismäßig geringe Drehzahl für die Abtriebswelle 25 reduziert werden und es ist ein für viele verschiedene Pressen geeigneter Antrieb gegeben.

Es entsteht also eine elektrische Antriebsvorrichtung 1, bei der zwei völlig voneinander unabhängige Antriebe durch den Haupt-Elektromotor 5 und den eine geringere elektrische Leistung aufweisenden Zusatz-Elektromotor 12 vorhanden sind. Der Zusatz-Elektromotor 12 ist also frei programmierbar und kann bei Bedarf zugeschaltet werden und so für einen zusätzlichen Antrieb der anzutreibenden Einrichtung sorgen oder auch dieselbe abbremsen. Dies ist bei einer Presse insbesondere in denjenigen Zuständen vorteilhaft, in denen zusätzliche Antriebsleistung erforderlich ist, meistens also außerhalb des eigentlichen Arbeitsweges, z.B. um den Leerhub eines Stößels zeitlich zu verkürzen.

## Patentansprüche

1. Elektrische Antriebsvorrichtung, insbesondere für Pressenanlagen und/oder deren Bestandteile, mit einem Haupt-Elektromotor zum Antreiben eines Schwungrades, welches über eine lösbare Kupplungseinrichtung eine Antriebswelle antreibt, und mit einem Zusatz-Elektromotor, der zusätzlich zum Antrieb der Antriebswelle nutzbar ist,
**dadurch gekennzeichnet,** daß
der Haupt-Elektromotor (5) und der Zusatz-Elektromotor (12) innerhalb des Schwungrades (2) angeordnet sind.

2. Antriebsvorrichtung nach Anspruch 1,
**dadurch gekennzeichnet,** daß
das Schwungrad (2) eine zentrale Bohrung (3) aufweist, in welcher der Haupt-Elektromotor (5) und der Zusatz-Elektromotor (12) angeordnet sind.

3. Antriebsvorrichtung nach Anspruch 1 oder 2,
**dadurch gekennzeichnet,** daß
der Zusatz-Elektromotor (12) die Antriebswelle (4) direkt antreibt.

4. Antriebsvorrichtung nach einem der Ansprüche 1, 2 oder 3,
**dadurch gekennzeichnet,** daß
für den Haupt-Elektromotor (5) und/oder den Zusatz-Elektromotor (12) eine Kühleinrichtung (10,16) vorgesehen ist.

5. Antriebsvorrichtung nach einem der Ansprüche 1 bis 4,
**dadurch gekennzeichnet,** daß
der Antriebswelle (4) eine Getriebeeinrichtung (24) nachgeschaltet ist, die zumindest teilweise innerhalb des Schwungrades (2) angeordnet ist.

6. Antriebsvorrichtung nach Anspruch 5,
**dadurch gekennzeichnet,** daß
die Getriebeeinrichtung (24) als Planetengetriebe ausgebildet ist, dessen Hohlrad als stillstehender Trägerflansch (9) zur Aufnahme von Bestandteilen (6,13) der beiden Elektromotoren (5,12) dient.

7. Antriebsvorrichtung nach Anspruch 6,
**dadurch gekennzeichnet**, daß
ein Stator (6) des Haupt-Elektromotors (5) an dem Trägerflansch (9) angeordnet ist, und daß ein Rotor (7) des Haupt-Elektromotors (5) an dem Schwungrad (2) angeordnet ist.

8. Antriebsvorrichtung nach Anspruch 6 oder 7,
**dadurch gekennzeichnet,** daß
ein Stator (13) des Zusatz-Elektromotors (12) an dem Trägerflansch (9) angeordnet ist, und daß ein Rotor (14) des Zusatz-Elektromotors (12) auf der Antriebswelle (4) angebracht ist.

9. Antriebsvorrichtung nach einem der Ansprüche 6 bis 8,
**dadurch gekennzeichnet,** daß
das Planetengetriebe (24) zusätzlich die Antriebswelle (4) als Sonnenrad aufweist, wobei zwischen der Antriebswelle (4) und dem Trägerflansch (9) Planetenräder (26) angeordnet sind, welche sich von der Antriebswelle angetrieben innerhalb des Trägerflansches (9) abwälzen, und wobei ein die Planetenräder (26) tragender Planetenradträger die Abtriebswelle (25) bildet.

10. Antriebsvorrichtung nach einem der Ansprüche 1 bis 9,
**dadurch gekennzeichnet,** daß
der Zusatz-Elektromotor (14) eine geringere Leistung aufweist als der Haupt-Elektromotor (11).
